# FASCICULE DE BREVET EUROPEEN

(11) **EP 3 162 031 B1**
(45) Date de publication et mention de la délivrance du brevet: **15.08.2018**
(21) Numéro de dépôt: 15728037.1
(22) Date de dépôt: 15.06.2015
(51) Int. Cl.: H04L 29/08, B60H 1/00, B60H 1/22, H04L 12/40

(54) **SYSTEME DE PRE-CONDITIONNEMENT D'UN VEHICULE AUTOMOBILE**
SYSTEM ZUR VORKONDITIONIERUNG EINES KRAFTFAHRZEUGES
SYSTEM FOR PRECONDITIONING A MOTOR VEHICLE

(30) Priorité: 27.06.2014 FR 1456031
(43) Date de publication de la demande: 03.05.2017
(73) Titulaire: Valeo Systemes Thermiques, 78320 Le Mesnil Saint Denis (FR)
(72) Inventeur: DE SOUZA, Stéphane, F-78690 Les Essarts-le-Roi (FR)
(74) Mandataire: Metz, Gaëlle
(86) Numéro de dépôt international: PCT/EP2015/063359
(87) Numéro de publication internationale: WO 2015/197417

(56) Documents cités:
- FR-A1- 2 818 197
- FR-A1- 2 889 010
- US-A1- 2010 288 745

## Description

La présente invention concerne de manière générale le domaine des véhicules automobiles, et plus précisément un système de pré-conditionnement d'un véhicule automobile.

Par pré-conditionnement, on entend tout type de réglages liés à certains équipements (chauffage, climatisation, rétroviseurs, sièges...) du véhicule qui permet d'assurer aux utilisateurs du véhicule un certain confort au moment même où ils pénètrent dans l'habitacle du véhicule.

En particulier, il est connu d'équiper certains véhicules automobiles d'un dispositif de préchauffage permettant d'assurer par exemple le dégivrage et/ou le désembuage des vitres du véhicule avant la venue de l'utilisateur dans le véhicule. Ce dispositif de chauffage comporte un programmateur horaire embarqué, comme décrit par exemple dans le document FR 2 667 547. Une telle solution manque cependant de souplesse puisqu'il est nécessaire de programmer à l'avance une heure à laquelle le dispositif de préchauffage doit se mettre en route, sans tenir compte d'éventuels contretemps par rapport à l'utilisation réelle du véhicule, ou de changements des conditions climatiques.

Pour remédier à ce problème, le document FR 2 941 199 propose un système de pré-conditionnement d'un véhicule permettant de régler notamment la température à l'intérieur du véhicule lorsque ce dernier est en charge électrique sur un réseau de distribution d'énergie électrique. Le système repose sur l'utilisation d'un module de contrôle, situé par exemple au domicile de l'utilisateur, et apte à échanger des signaux par courant porteur avec un module de préchauffage équipant le véhicule. L'utilisateur peut ainsi commander le démarrage du système de pré-conditionnement depuis son domicile en fonction de son emploi du temps et en toute connaissance des conditions météorologiques. Malheureusement, ce système ne s'adresse qu'aux véhicules électriques ou hybrides, et ne peut en outre pas être utilisé si le véhicule n'est pas branché sur un réseau électrique lui-même équipé du module de contrôle.

Une autre solution, décrite notamment dans le document KR 20130134582, consiste à équiper le véhicule d'une unité télématique apte d'une part, à échanger des signaux radiofréquences avec un dispositif externe au véhicule, en particulier un téléphone mobile doté d'une application logicielle dédiée, et d'autre part, à établir une communication CAN avec le réseau CAN équipant le véhicule. Une telle solution est très souple d'utilisation puisqu'elle permet à l'utilisateur de pouvoir lancer un pré-conditionnement en température de l'habitacle du véhicule à distance, quel que soit l'endroit où l'utilisateur et le véhicule se trouvent. Néanmoins, un inconvénient important de cette technique réside dans l'utilisation du réseau CAN du véhicule. En effet, les véhicules de moyenne gamme ou haut de gamme sont de plus en plus équipés de nombreuses fonctionnalités (dépollution, airbags, détection de pannes...) utilisant un grand nombre de capteurs et de calculateurs reliés au réseau CAN. Une communication établie par l'unité télématique, conformément à l'enseignement du document KR 20130134582 conduirait alors au réveil de tous les composants reliés au réseau CAN, avec un fort appel en courant très impactant pour la batterie du véhicule. En outre, avec une telle architecture au niveau du réseau CAN, cette fonctionnalité ne peut être proposée que sur des véhicules de série. En d'autres termes, il n'est pas facile de proposer en service après-vente une fonctionnalité de préchauffage qui nécessiterait d'intervenir sur de nombreux composants du réseau CAN.

Un autre exemple de système de pré-conditionnement pour véhicule connu est divulgué dans la demande FR 2818197.

La présente invention a pour but de pallier les inconvénients et limitations des systèmes connus.

L'invention est définie par un système selon la revendication 1. Des modes de réalisation supplémentaires sont définis dans les revendications dépendantes.

L'invention est notamment fondée sur le fait que certains systèmes, dits de confort, équipant aujourd'hui des véhicules automobiles de moyenne ou de haut de gamme, en particulier les systèmes de chauffage et/ou climatisation, les systèmes de réglages de rétroviseurs électriques, les lève-vitres électriques..., utilisent une architecture de réseau LIN (initiales anglo-saxonnes mises pour Local Area Network). Le bus de communication LIN est un bus relativement lent et petit, mais il est fiable et économique, notamment si on le compare au bus CAN. Il consiste en un protocole de communication qui s'appuie sur une configuration maître/esclave(s). Chaque élément connecté au bus est appelé « noeud ».

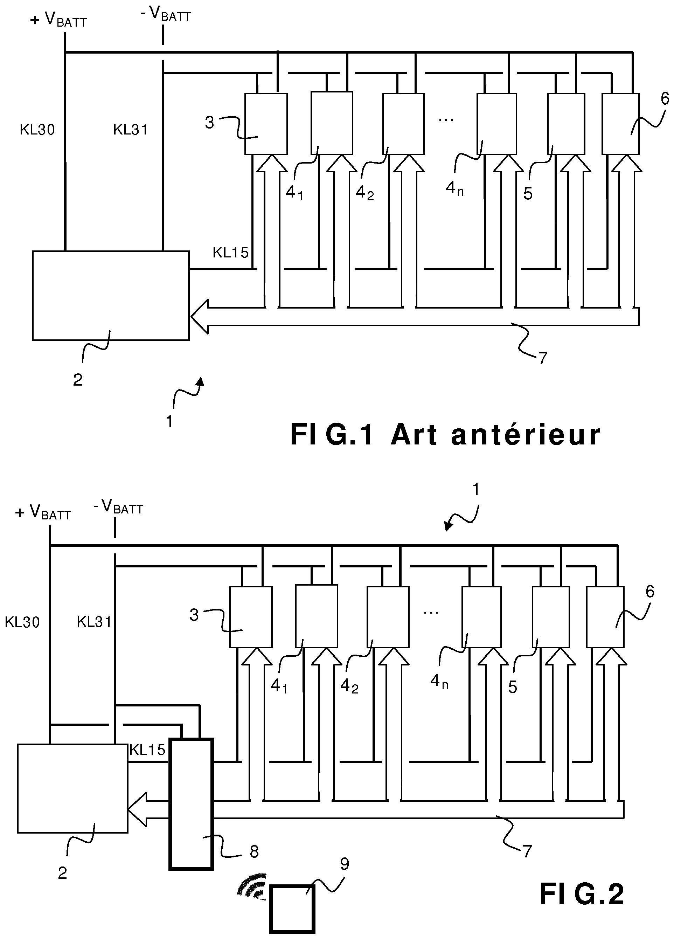

La figure 1 illustre une architecture 1 classique d'un réseau LIN formant un système de chauffage et/ou de climatisation. Le noeud maître est ici constitué d'un module électronique de contrôle 2, par exemple au niveau d'un panneau de contrôle situé sur tableau de bord du véhicule, et les noeuds esclaves comportent notamment un moteur-pulseur apte à entraîner un ventilateur, une pluralité d'actionneurs 4₁ à 4ₙ pour commander les déplacements de volets de distribution et de mixage d'air, un ou plusieurs capteurs 5 constitués par des sondes de température et une ou plusieurs résistances de chauffage 6. Les différents noeuds du réseau LIN sont reliés à un conducteur commun d'alimentation en énergie acheminant la tension de batterie +V_{BATT} du véhicule (conducteur KL30), ou une tension dérivée de celle-ci (conducteur KL15 lors de la mise sous contact du véhicule), et à un conducteur commun relié à la masse (potentiel de référence -V_{BATT}) du véhicule (conducteur KL31). Les différents noeuds échangent des informations par l'intermédiaire d'un bus LIN 7. Le module électronique de contrôle 2 reçoit ainsi à sa demande des informations d'état en provenance des noeuds esclaves et transmet à ceux-ci des informations de commande afin de réaliser les fonctions souhaitées de ventilation, réglages de température d'habitacle, désembuage, dégivrage,... commandées à partir du panneau de contrôle.

Une telle architecture 1 de réseau LIN est en général utilisée comme sous-réseau d'un bus CAN (non représenté) auquel le module électronique de contrôle 2 est connecté.

Des exemples d'architectures de réseau LIN connues sont divulguées dans les demandes US 2010288745 et FR 2889010.

L'invention propose de s'appuyer sur cette architecture de réseau LIN pour proposer un système de pré-conditionnement du véhicule.

Plus précisément, la présente invention a pour objet un système de pré-conditionnement d'un véhicule automobile équipé d'une architecture de réseau LIN dans laquelle un module électronique de contrôle dans l'habitacle du véhicule, constituant un noeud maître de ladite architecture de réseau LIN, est apte à commander, sur action d'un occupant du véhicule, et au travers d'un bus LIN, une pluralité de composants formant des noeuds esclaves de ladite architecture de réseau LIN, le système de pré-conditionnement étant caractérisé en ce qu'il comporte un module électronique de pré-conditionnement intégré dans ladite architecture de réseau LIN, ledit module électronique de pré-conditionnement étant apte à recevoir, par l'intermédiaire d'une liaison sans fil, au moins une consigne de pré-conditionnement émise par un dispositif de commande externe au véhicule, et à commander par suite au moins un composant de ladite pluralité de composants en lieu et place du noeud maître.

Selon d'autres caractéristiques additionnelles possibles :
- le module électronique de pré-conditionnement comporte un sélecteur d'états apte à faire basculer automatiquement ledit module électronique de pré-conditionnement dans un état actif dans lequel il est apte à commander au moins un composant de ladite pluralité de composants en lieu et place du noeud maître, ou dans un état passif dans lequel seul le noeud maître est apte à commander les noeuds esclaves de l'architecture de réseau LIN ;
- le sélecteur d'états peut faire basculer automatiquement ledit module électronique de pré-conditionnement dudit état actif à l'état passif sur détection d'une mise sous contact d'un démarreur du véhicule automobile ;
- le sélecteur d'états empêche de préférence l'état actif si le module électronique de contrôle est déjà actif ; on garantit ainsi que le module de contrôle reste dans tous les cas prioritaire sur le module électronique de pré-conditionnement ;
- le dispositif de commande externe au véhicule comprend par exemple un téléphone cellulaire ;
- la liaison sans fil est une liaison de communication de type GSM, ou une liaison de courte portée, de type Wi-Fi ou Bluetooth;
- la liaison sans fil est de préférence bidirectionnelle, ledit module électronique de pré-conditionnement comportant des moyens d'émission/réception aptes à permettre un échange de données avec le dispositif de commande externe via la liaison sans fil bidirectionnelle ;
- le module électronique de pré-conditionnement est avantageusement apte à être interposé entre le noeud maître et les noeuds esclaves de l'architecture de réseau LIN ; la fonction de pré-conditionnement peut ainsi être prévue en production série des véhicules, ou proposée en service après-vente ultérieurement ;
- en variante, le module électronique de pré-conditionnement est un sous-module intégré dans le noeud maître ou l'un quelconque des noeuds esclaves de l'architecture de réseau LIN ;
- l'architecture de réseau LIN est par exemple un système de chauffage et/ou de climatisation de l'habitacle du véhicule automobile, le système de pré-conditionnement étant apte à pré-conditionner en température l'habitacle du véhicule automobile.

L'invention et les avantages qu'elle procure seront mieux compris au vu de la description suivante, faite en référence aux figures annexées, dans lesquelles :
- la figure 1, déjà décrite, représente schématiquement une architecture classique de réseau LIN, en particulier pour le chauffage et/ou la climatisation;
- la figure 2 illustre schématiquement la même architecture de réseau LIN équipée coopérant avec un système de pré-conditionnement selon un mode de réalisation possible de l'invention ;
- la figure 3 représente un synoptique fonctionnel d'un module de pré-conditionnement selon une réalisation préférée.

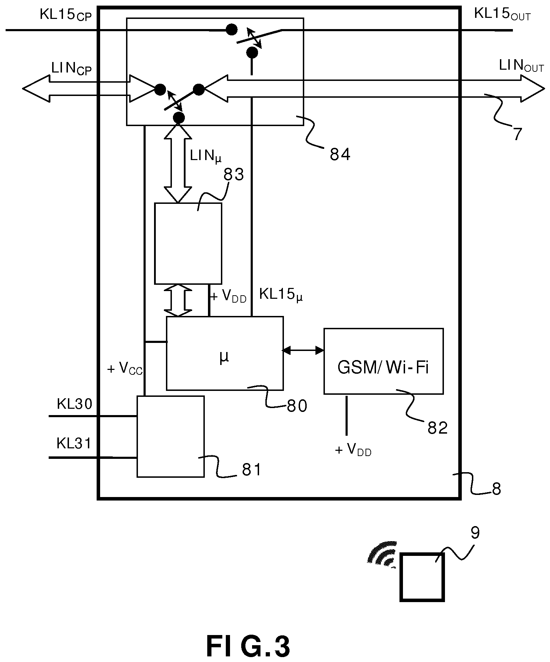

Dans la description qui suit, on suppose, à titre d'exemple non limitatif, qu'un véhicule automobile est équipé d'une architecture de réseau LIN dédiée au chauffage et/ou à la climatisation de l'habitacle du véhicule automobile. Comme vu précédemment, une telle architecture permet à un occupant du véhicule, après mise en position de contact du véhicule, d'agir sur le moteur-pulseur et/ou les volets et/ou les résistances de chauffage, au moyen de commandes spécifiques du panneau de contrôle. Un exemple de système de pré-conditionnement apte à pré-conditionner en température l'habitacle du véhicule automobile va être décrit en référence aux figures 2 et 3. Bien entendu, d'autres types de pré-conditionnement du véhicule, par exemple le réglage de rétroviseurs électriques et/ou de sièges électriques peuvent être aussi envisagés dans le cadre de la présente invention, dès lors que la fonctionnalité est déjà prévue sur le véhicule sous forme d'une architecture de réseau LIN.

On retrouve sur la figure 2 l'architecture 1 de réseau LIN décrite en référence à la figure 1. Dans ce mode de réalisation conforme à l'invention, un système de pré-conditionnement de la température dans l'habitacle est formé par un module électronique de pré-conditionnement 8 prévu dans l'habitacle, et un dispositif de commande 9 sans fil.

Le module électronique de pré-conditionnement 8 est intégré dans l'architecture 1 de réseau LIN, ici sous la forme d'un équipement interposé sur le bus LIN 7 entre le noeud maître 2 et les noeuds esclaves 3 à 6 de l'architecture 1 de réseau LIN. Tout comme les autres noeuds du réseau, ce module de pré-conditionnement 8 est relié aux alimentations KL30, KL31 et KL15 du véhicule. Le dispositif de commande 9 est par exemple un téléphone cellulaire dans laquelle on a chargé une application logicielle dédiée au pré-conditionnement du chauffage. Plus généralement, le dispositif de commande 9 peut être constitué par tout dispositif portatif apte à émettre une consigne de pré-conditionnement sur une liaison sans fil, de type liaison GSM ou une liaison de courte portée de type Wi-Fi ou Bluetooth. Le module électronique de pré-conditionnement 8 est quant à lui apte à recevoir, par l'intermédiaire de la liaison sans fil, la consigne de pré-conditionnement émise par le dispositif de commande 9, et à commander par suite au moins l'un des noeuds esclaves 3, 4₁...4ₙ, 5, 6 de l'architecture 1 de réseau LIN en lieu et place du noeud maître 2.

La figure 3 illustre, sous forme de synoptique simplifiée, les différentes fonctionnalités du module de pré-conditionnement 8, dans un mode de réalisation préférée de l'invention. Ces fonctionnalités sont ici au nombre de cinq, et regroupent :
- un microcontrôleur 80 pour piloter l'ensemble des fonctionnalités du module 8 ;
- un bloc 81 relatif à la gestion de l'alimentation du module 8 ;
- un bloc 82 relatif à la communication avec le dispositif portatif 9 ;
- un bloc 83 relatif à la communication selon le protocole LIN ; et
- un sélecteur 84 d'états.

Le bloc 81 permet de gérer l'alimentation en tension du module 8, et notamment de délivrer, à partir de la tension de batterie et la masse du véhicule (connexions KL30 et KL31) une tension +V_{CC} adaptée pour le fonctionnement du microcontrôleur 80 et du sélecteur 84 d'états.

Le bloc 82 comprend a minima des moyens aptes à réceptionner les consignes reçues sur la liaison sans fil, telles qu'un ordre de déclenchement d'un cycle de pré-conditionnement, ou un ordre d'arrêt du cycle de pré-conditionnement. De préférence, la liaison sans fil est bidirectionnelle, et le bloc 82 comporte également des moyens d'émission de signaux radiofréquences vers le dispositif portatif 9. Cela permet en particulier d'informer l'utilisateur de la bonne réception d'une consigne, ou de l'état d'avancement d'un cycle de pré-conditionnement suite à la réception d'une consigne, voire d'informer l'utilisateur, par l'intermédiaire du dispositif portatif 9, de la température mesurée par les capteurs de température 5, pour lui permettre une meilleure interaction avec le système.

Le bloc 83 est, sous le contrôle du microcontrôleur 80, chargé de la mise en forme des signaux de commande LIN_{µ} générés par le module 8 en lieu et place du noeud maître 2 pour transiter sur le bus LIN 7.

Le sélecteur d'états 84 est quant à lui en charge de faire basculer automatiquement le module 8 électronique de pré-conditionnement dans un état actif dans lequel il est apte à commander les noeuds esclaves 3, 4₁ ... 4ₙ, 5, 6 du réseau LIN en lieu et place du noeud maître 2, ou dans un état passif dans lequel seul le noeud maître est apte à commander ces noeuds esclaves.

Le fonctionnement en lieu et place du noeud maître impose non seulement que seuls les signaux de commande LIN_{µ} soient susceptibles de transiter vers les noeuds esclaves au lieu des signaux de commande LIN_{CP} en provenance du module électronique de contrôle ou noeud maître 2, mais également que le module de pré-conditionnement 8 soit apte à générer la tension représentative de la mise sous contact du véhicule. Sur la figure 3, cette tension est symbolisée par la référence KL15_{µ}, pour la distinguer de la tension KL15_{CP} issue du noeud maître 2. Cette double fonctionnalité est schématisée par deux interrupteurs dans le sélecteur d'états 84 qui sont :
- soit simultanément connectés entre le bus LIN 7 et le bloc 83 pour l'un, et entre le microcontrôleur 80 et entre le connecteur KL15_{µ} véhiculant la tension de mise sous contact issue du module de pré-conditionnement 8 et le connecteur de sortie KL15_{OUT} de ce module 8 pour l'autre ; ce cas correspondant à l'état actif du module de pré-conditionnement 8 ;
- soit simultanément connectés entre le bus LIN 7 et l'entrée/sortie LIN du noeud maître 2 pour l'un, et entre le microcontrôleur 80 et entre le connecteur KL15_{CP} véhiculant la tension de mise sous contact issue du noeud maître 2 et le connecteur de sortie KL15_{OUT} de ce module 8 pour l'autre ; ce cas correspondant à l'état passif du module de pré-conditionnement 8.

De manière préférée, ledit sélecteur d'états empêche l'état actif si le module électronique de contrôle 2 est lui-même déjà actif. Pour ce faire, le module de pré-conditionnement 8, sur réception d'une consigne par l'intermédiaire de la liaison sans fil, vérifie au préalable qu'aucune donnée n'est en train de transiter sur le bus 7, et que le véhicule n'est pas en position de mise sous contact (dans ce cas, la tension sur la connexion KL15_{CP} est nulle).

Le module de pré conditionnement 8 retourne automatiquement dans son état passif dans lequel il est transparent pour le réseau LIN, dans l'un quelconque des cas suivants :
- le cycle de pré-conditionnement est terminé ;
- une nouvelle consigne d'arrêt de cycle a été reçue par le bloc 32 ;
- le module de pré-conditionnement 8 détecte que le démarreur du véhicule est mis sous contact (dans ce cas, la tension sur la connexion KL15_{CP} n'est plus nulle).

On notera, par ailleurs, que le calculateur 80 peut générer un signal KL15_{µ} qui permet soit d'alimenter KL15_{OUT} par le biais de KL15_{CP}, soit d'alimenter KL15_{OUT} par le biais de KL30.

Dans ce qui précède, le module de pré-conditionnement 8 a été décrit comme un module en tant que tel, qui peut être interposé à tout moment dans l'architecture de réseau LIN. La fonctionnalité peut ainsi être prévue dès l'origine sur le véhicule, ou alors en service après-vente.

En variante, on peut prévoir le module de pré conditionnement 8 sous forme d'un sous-module de l'un quelconque des noeuds du réseau LIN.

Grâce à l'invention, le système de pré-conditionnement est extrêmement souple d'utilisation, peut être installé à tout moment, et garantit que seuls les composants nécessaires au pré-conditionnement seront activés, préservant ainsi la batterie du véhicule.

## Revendications

1. Système de pré-conditionnement adapté à pré-conditionner en température l'habitacle d'un véhicule automobile équipé d'une architecture (1) de réseau Local Interconnect Network, autrement appelé réseau LIN, ladite architecture étant dédiée au chauffage et/ou à la climatisation de l'habitacle du véhicule automobile, ladite architecture (1) comprenant un module électronique de contrôle dans l'habitacle du véhicule, ledit module électronique de contrôle constituant un noeud maître (2) de ladite architecture (1) de réseau LIN, ledit module électronique de contrôle étant adapté commander, sur action d'un occupant du véhicule, et au travers d'un bus LIN (7), une pluralité de composants (3, 4₁...4ₙ, 5, 6) formant des noeuds esclaves de ladite architecture (1) de réseau LIN, le système de pré-conditionnement étant **caractérisé en ce qu'**il comporte un module électronique de pré-conditionnement (8) intégré dans ladite architecture (1) de réseau LIN, ledit module électronique de pré-conditionnement (8) étant adapté à recevoir, par l'intermédiaire d'une liaison sans fil, au moins une consigne de pré-conditionnement émise par un dispositif de commande (9) externe au véhicule, et à commander par suite au moins un composant de ladite pluralité de composants (3, 4₁...4ₙ, 5, 6) en lieu et place du noeud maître (2), ledit module électronique de pré-conditionnement (8) étant adapté à être interposé sur le bus LIN (7) entre le noeud maître (2) et les noeuds esclaves de l'architecture (1) de réseau LIN, le module électronique de pré-conditionnement (8) comportant un sélecteur (84) d'états adapté à faire basculer automatiquement ledit module (8) électronique de pré-conditionnement dans un état actif dans lequel le module électronique de pré-conditionnement (8) est adapté à d'une part commander au moins un composant de ladite pluralité de composants (3, 4₁...4ₙ, 5, 6) en lieu et place du noeud maître (2) et d'autre part à générer vers les noeuds esclaves la tension représentative de mise sous contact du véhicule en lieu et place du noeud maître (2), ou dans un état passif dans lequel seul le noeud maître (2) est adapté à d'une part commander les noeuds esclaves de l'architecture (1) de réseau LIN et d'autre part à générer vers les noeuds esclaves la tension représentative de mise sous contact du véhicule.

2. Système de pré-conditionnement selon la revendication 1, **caractérisé en ce que** le sélecteur (84) d'états fait basculer automatiquement ledit module électronique de pré-conditionnement (8) dudit état actif à l'état passif sur détection d'une mise sous contact d'un démarreur du véhicule automobile.

3. Système de pré-conditionnement selon l'une quelconque des revendications 1 ou 2, **caractérisé en ce que** ledit sélecteur (84) d'états empêche l'état actif si le module électronique de contrôle (2) est déjà actif.

4. Système de pré-conditionnement selon l'une quelconque des revendications précédentes, **caractérisé en ce que** le dispositif (9) de commande externe au véhicule comprend un téléphone cellulaire.

5. Système de pré-conditionnement selon l'une quelconque des revendications précédentes, **caractérisé en ce que** ladite liaison sans fil est une liaison de communication de type GSM.

6. Système de pré-conditionnement selon l'une quelconque des revendications 1 à 4, **caractérisé en ce que** ladite liaison sans fil est une liaison de courte portée, de type Wi-Fi ou Bluetooth.

7. Système de pré-conditionnement selon l'une quelconque des revendications précédentes, **caractérisé en ce que** ladite liaison sans fil est bidirectionnelle, ledit module électronique de pré-conditionnement (8) comportant des moyens (82) d'émission/réception adaptés à permettre un échange de données avec le dispositif de commande externe via la liaison sans fil bidirectionnelle.

8. Système de pré-conditionnement selon l'une quelconque des revendications précédentes, **caractérisé en ce que** ladite architecture (1) de réseau LIN est un système de chauffage et/ou de climatisation de l'habitacle du véhicule automobile, le système de pré-conditionnement étant adapté à pré-conditionner en température l'habitacle du véhicule automobile.

## Patentansprüche

1. Vorkonditionierungssystem, das zum Temperatur-Vorkonditionieren des Innenraums eines Kraftfahrzeugs geeignet ist, ausgestattet mit einer Netzarchitektur (1) Local Interconnect Network, auch LIN-Netz genannt, wobei die Architektur für die Heizung und/oder Klimatisierung des Innenraums des Kraftfahrzeugs bestimmt ist, wobei die Architektur (1) ein elektronisches Kontrollmodul im Innenraum des Fahrzeugs enthält, wobei das elektronische Kontrollmodul einen Master-Knoten (2) der LIN-Netzarchitektur (1) bildet, wobei das elektronische Kontrollmodul geeignet ist, unter der Einwirkung durch einen Insassen des Fahrzeugs und über einen LIN-Bus (7) eine Vielzahl von Bauteilen (3, 4₁...4ₙ, 5, 6) zu steuern, die Slave-Knoten der LIN-Netzarchitektur (1) bilden, wobei das Vorkonditionierungssystem **dadurch gekennzeichnet ist, dass** es ein in die LIN-Netzarchitektur (1) integriertes elektronisches Vorkonditionierungsmodul (8) aufweist, wobei das elektronische Vorkonditionierungsmodul (8) geeignet ist, über eine drahtlose Verbindung mindestens eine Vorkonditionierungsanweisung zu empfangen, die von einer Steuervorrichtung (9) außerhalb des Fahrzeugs gesendet wird, und anschließend anstelle des Master-Knotens (2) mindestens ein Bauteil der Vielzahl von Bauteilen (3, 4₁...4ₙ, 5, 6) zu steuern, wobei das elektronische Vorkonditionierungsmodul (8) geeignet ist, auf dem LIN-Bus (7) zwischen den Master-Knoten (2) und die Slave-Knoten der Netzarchitektur (1) LIN eingefügt zu werden, wobei das elektronische Vorkonditionierungsmodul (8) einen Zustandswahlschalter (84) aufweist, der geeignet ist, das elektronische Vorkonditionierungsmodul (8) automatisch in einen aktiven Zustand, in dem das elektronische Vorkonditionierungsmodul (8) geeignet ist, einerseits anstelle des Master-Knotens (2) mindestens ein Bauteil der Vielzahl von Bauteilen (3, 4₁...4ₙ, 5, 6) zu steuern und andererseits anstelle des Master-Knotens (2) die für das Inkontaktbringen des Fahrzeugs repräsentative Spannung zu den Slave-Knoten zu erzeugen, oder in einen passiven Zustand umschalten zu lassen, in dem nur der Master-Knoten (2) geeignet ist, einerseits die Slave-Knoten der LIN-Netzarchitektur (1) zu steuern und andererseits die für das Inkontaktbringen des Fahrzeugs repräsentative Spannung zu den Slave-Knoten zu erzeugen.

2. Vorkonditionierungssystem nach Anspruch 1, **dadurch gekennzeichnet, dass** der Zustandswahlschalter (84) das elektronische Vorkonditionierungsmodul (8) bei Erfassung eines Inkontaktbringens eines Anlassers des Kraftfahrzeugs automatisch vom aktiven Zustand in den passiven Zustand umschaltet.

3. Vorkonditionierungssystem nach einem der Ansprüche 1 oder 2, **dadurch gekennzeichnet, dass** der Zustandswahlschalter (84) den aktiven Zustand verhindert, wenn das elektronische Kontrollmodul (2) bereits aktiv ist.

4. Vorkonditionierungssystem nach einem der vorhergehenden Ansprüche, **dadurch gekennzeichnet, dass** die Steuervorrichtung (9) außerhalb des Fahrzeugs ein Mobiltelefon enthält.

5. Vorkonditionierungssystem nach einem der vorhergehenden Ansprüche, **dadurch gekennzeichnet, dass** die drahtlose Verbindung eine Kommunikationsverbindung des Typs GSM ist.

6. Vorkonditionierungssystem nach einem der Ansprüche 1 bis 4, **dadurch gekennzeichnet, dass** die drahtlose Verbindung eine Nahbereichsverbindung des Typs Wi-Fi oder Bluetooth ist.

7. Vorkonditionierungssystem nach einem der vorhergehenden Ansprüche, **dadurch gekennzeichnet, dass** die drahtlose Verbindung bidirektional ist, wobei das elektronische Vorkonditionierungsmodul (8) Sende-/Empfangseinrichtungen (82) aufweist, die geeignet sind, einen Datenaustausch mit der externen Steuervorrichtung über die bidirektionale drahtlose Verbindung zu erlauben.

8. Vorkonditionierungssystem nach einem der vorhergehenden Ansprüche, **dadurch gekennzeichnet, dass** die LIN-Netzarchitektur (1) ein Heizungs- und/oder Klimatisierungssystem des Innenraums des Kraftfahrzeugs ist, wobei das Vorkonditionierungssystem geeignet ist, die Temperatur des Innenraums des Kraftfahrzeugs vorzukonditionieren.

## Claims

1. Preconditioning system designed to precondition the temperature of the passenger compartment of a motor vehicle equipped with a Local Interconnect Network network architecture (1), also called LIN network, said architecture being dedicated to heating and/or to air-conditioning the passenger compartment of the motor vehicle, said architecture (1) comprising an electronic control module in the passenger compartment of the vehicle, said electronic control module constituting a master node (2) of said LIN network architecture (1), said electronic control module being designed to control, upon an action from an occupant of the vehicle, and through a LIN bus (7), a plurality of components (3, 4₁...4ₙ, 5, 6) forming slave nodes of said LIN network architecture (1), the preconditioning system being **characterized in that** it includes a preconditioning electronic module (8) integrated into said LIN network architecture (1), said electronic preconditioning module (8) being designed to receive, by way of a wireless link, at least one preconditioning setpoint transmitted by a control device (9) external to the vehicle, and to thereafter control at least one component from said plurality of components (3, 4₁...4ₙ, 5, 6) in place of said master node (2), said electronic preconditioning module (8) being designed to be interposed on the LIN bus (7) between the master node (2) and the slave nodes of the LIN network architecture (1), the electronic preconditioning module (8) including a state selector (84) designed to automatically switch said electronic preconditioning module (8) into an active state in which the electronic preconditioning module (8) is able, on the one hand, to control at least one component from said plurality of components (3, 4₁...4ₙ, 5, 6) in place of the master node (2) and, on the other hand, to generate, for the slave nodes, the voltage representative of switching on of the vehicle in place of the master node (2), or into a passive state in which only the master node (2) is able, on the one hand, to control the slave nodes of the LIN network architecture (1) and, on the other hand, to generate, for the slave nodes, the voltage representative of switching on of the vehicle.

2. Preconditioning system according to Claim 1, **characterized in that** the state selector (84) automatically switches said electronic preconditioning module (8) from said active state to the passive state upon detection of switching on of a starter of the motor vehicle.

3. Preconditioning system according to either one of Claims 1 and 2, **characterized in that** said state selector (84) prohibits the active state if the electronic control module (2) is already active.

4. Preconditioning system according to any one of the preceding claims, **characterized in that** the control device (9) external to the vehicle includes a cellular telephone.

5. Preconditioning system according to any one of the preceding claims, **characterized in that** said wireless link is a GSM communication link.

6. Preconditioning system according to any one of Claims 1 to 4, **characterized in that** said wireless link is a Wi-Fi or Bluetooth short-range link.

7. Preconditioning system according to any one of the preceding claims, **characterized in that** said wireless link is bidirectional, said electronic preconditioning module (8) including transceiver means (82) designed to allow an exchange of data with the external control device via the bidirectional wireless link.

8. Preconditioning system according to any one of the preceding claims, **characterized in that** said LIN network architecture (1) is a system for heating and/or for air-conditioning the passenger compartment of the motor vehicle, the preconditioning system being designed to precondition the temperature of the passenger compartment of the motor vehicle.
